# EUROPEAN PATENT SPECIFICATION

(11) **EP 0 529 336 B1**
(45) Date of publication and mention of the grant of the patent: **24.01.1996**
(21) Application number: 92112987.0
(22) Date of filing: 30.07.1992
(51) Int. Cl.: B29C 65/10

(54) **Method of thermal fusion**
Heissklebeverfahren
Procédé de fusion thermique

(30) Priority: 01.08.1991 JP 216037/91; 21.08.1991 JP 209337/91
(43) Date of publication of application: 03.03.1993
(73) Proprietor: Toppan Printing Co., Ltd., Taito-ku Tokyo (JP)
(72) Inventor: Imai, Takayuki, c/o Toppan Printing Co., Ltd., Tokyo 110 (JP); Shimatani, Ken, c/o Toppan Printing Co., Ltd., Tokyo 110 (JP); Kaminaga, Junichi, c/o Toppan Printing Co., Ltd., Tokyo 110 (JP); Hayashi, Kenji, c/o Toppan Printing Co., Ltd., Tokyo 110 (JP); Shiki, Hiroya, c/o Toppan Printing Co., Ltd., Tokyo 110 (JP); Yamamoto, Hideki, c/o Toppan Printing Co., Ltd., Tokyo 110 (JP)
(74) Representative: Tiedtke, Harro, Dipl.-Ing.

(56) References cited:
- US-A- 4 432 820
- PATENT ABSTRACTS OF JAPAN vol. 13, no. 577 (M-910) 20 December 1989 & JP-A-12 41 434 (DAINIPPON PRINTING) 23 March 1988
- PATENT ABSTRACTS OF JAPAN vol. 14, no. 60 (M-931) 5 February 1990 & JP-A-12 86 842 (DAINIPPON PRINTING)
- PATENT ABSTRACTS OF JAPAN vol. 13, no. 498 (M-890) 9 November 1989 & JP-A-11 99 847 (DAINIPPON PRINTING)

## Description

### BACKGROUND OF THE INVENTION

This invention relates to a method of thermally fusing constituent materials for fabricating containers, and more particularly to a method by which a surface comprising a polyolefin and a polyester portion can be thermally fused to a polyester surface.

Containers of beverages such as milk, milk beverages, fruit beverages and alcoholic beverages are conventionally fabricated of a paper base the inner surface of which is treated with polyolefins and the use of such constituent materials has been justified principally because of their hygienic property, waterproofness, moisture resistance and heat sealability.

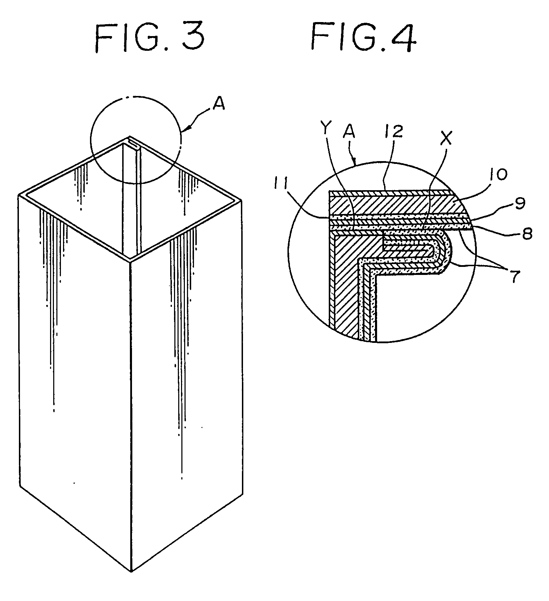

Among the conventional constituent materials for fabricating containers, those which have a body as shown in Fig. 3, particularly one intended to contain alcoholic beverages, are so adapted that the end faces of constituent materials will not be exposed at the joint to contact the contents of the container. Such end portions that are thermally fused together are encircled by A in Fig. 3 and shown enlarged in cross section in Fig. 4. The end portion of one constituent material is folded inwardly by the length necessary for bonding and the outer surface of the resulting turnup is bonded to the inner surface of the corresponding end portion of the other material. The method commonly used to achieve this consists of removing the outer portion of base paper (i.e., the portion that corresponds to the turnup and which extends generally to the center of the paper in the direction of its thickness) by a certain length from its end and folding back the remaining inner half portion of paper thickness in the outer removed area. Consequently, the inner surfaces of the two constituent materials are bonded together in the area indicated by X in Fig. 4 whereas the outer surface of one material is bonded to the inner surface of the other material in the area indicated by Y.

Polyolefins have conventionally been used as constituent materials for both the inner and outer surfaces of containers. In fact, however, polyolefins will adsorb or be permeable to the flavor ingredients of beverages, so that containers that use polyolefins as materials for making the inner surfaces are unable to maintain the inherent aroma and taste of beverages. In addition, when constituent materials are prepared by extrusion coating of polyolefins, oxidation is likely to occur to produce a malodor.

With a view to solving these problems, constituent materials for containers that replace polyolefins by polyesters, particularly those having good heat sealability, in the inside layer of the container wall have been proposed. This approach, however, has been found to be impractical if the constituent material to be bonded are based on paper since paper which works as a heat insulator prevents effective heat sealing of the end portions to be bonded together. Under these circumstances, the two surfaces to be thermally fused are scorched with a gas burner or some other suitable device until they are melted, whereupon the molten surfaces are superposed one on the other to be fused together. This method is commonly referred to as a "flame treatment". However, if one of the two surfaces to be bonded is composed of two or more materials, for example, a polyester portion and a polyolefin portion, a flame treatment will produce lower oxides on the surface of the polyester portion. The oxides prevent the polyester surface from being effectively bonded to the other surface which is solely made of a polyester, whereby incomplete bonding occurs in the area indicated by X in Fig. 4.

The present inventors previously filed a patent application on a method by which a surface comprising a polyolefin and a polyester portion can be thermally fused to a polyester surface (Japanese Patent Application No. 23729/1990); the proposed method consisted of subjecting the surface comprising a polyolefin and a polyester portion to a flame treatment, then treating the same surface with hot air while treating the polyester surface with hot air, and finally compressing the two surfaces to be thermally fused together. However, it was later found that when the surface composed of a polyolefin and a polyester portion was subjected to a flame treatment, the polyester was either oxidized or hydrolyzed, causing adverse effects on its thermal fusion to the other surface which was solely made of a polyester.

In JP-A-1241434 a method is disclosed to form a sticking part of an envelope wherein the side part of one side of a laminated sheet is stuck to a surface layer side by inserting this side to the surface layer side. The laminated sheet comprises a surface layer comprising a polyolefin resin and a rearside layer comprising a low crystalline linear saturated polyester resin wherein the polyolefin resin surface and the polyester resin surface are stuck together by performing flame treatment.

### SUMMARY OF THE INVENTION

An object, therefore, of the present invention is to provide a method by which a surface having a polyolefin and a polyester portion can be thermally fused to a polyester surface to produce high bond strength.

The present inventors conducted intensive studies in order to attain the stated object of the invention and found that it could be achieved by a method in which a member having a surface comprising at least a polyolefin and a polyester portion and a member having a polyester surface are thermally fused together at said two surfaces; the method is characterized by comprising subjecting the polyolefin portion of said first surface to a flame treatment, then treating the polyester portion of said first surface and said polyester second surface with hot air, and finally compressing the two surfaces to be thermally fused together.

The same object can also be attained by a method in which the polyolefin portion of the first surface is subjected to a flame treatment and then treated with hot air while the polyester portion is only treated with hot air, treating the polyester second surface with hot air, and finally compressing the two surfaces to be thermally fused together.

In practice, the polyolefin and polyester portions of the first surface are adjacent to each other and the flame being applied to one portion will somewhat overlap the hot air being applied to the adjacent portion. It should, however, be noted that such overlap is permissible as long as it will not be deleterious to the object of the present invention.

### BRIEF DESCRIPTION OF THE DRAWINGS

Fig. 1 shows schematically the sequence of steps of performing thermal fusion by a method according to an embodiment of the present invention;

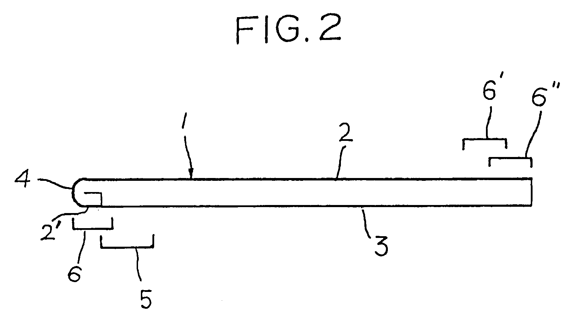

Fig. 2 is a cross-sectional view as seen in the direction of feeding the workpiece in step (A) of Fig.1;
Fig. 3 is a perspective view showing the body of a container fabricated by the method of the present invention; and
Fig. 4 is an enlarged cross section of the portion indicated by A in Fig. 3 which shows part of the area bonded by the method of the present invention.

### DETAILED DESCRIPTION OF THE INVENTION

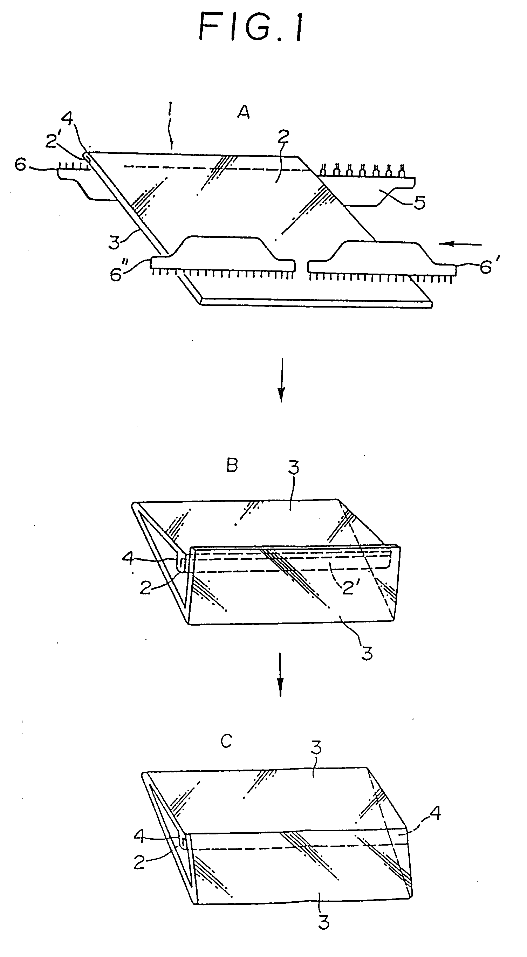

Fig. 1 shows schematically the sequence of steps of fabricating the body of a container by the method of thermal fusion of the present invention. Shown by 1 in Fig. 1 is a laminated film 1 having on one side a polyester surface 2 that will provide the inner surface of a container and, on the other side, a polyolefin surface 3 that will provide the outer surface of the container as well as a polyester surface 2' at one end portion 4.

As shown in Fig. 1A, the polyolefin surface 3 at end portion 4 is treated with the flame of a gas burner 5 and, then, the polyester surface 2' is treated with hot air coming through a nozzle 6.

In another embodiment of the present invention, the laminated film 1 having on one side a polyester surface 2 that will provide the inner surface of a container and, on the other side, a polyolefin surface 3 that will provide the outer surface of the container as well as a polyester surface 2' at one end portion 4 may be treated in a different way. First, as shown in Fig. 1A, the polyolefin surface 3 at end portion 4 is treated with the flame of a gas burner 5 and then treated with hot air coming through a nozzle 6 while, at the same time, the polyester surface 2' at end portion 4 is also treated with hot air.

In the polyester is exposed to high temperature in the presence of moisture, it will undergo hydrolysis to suffer from deterioration in physical properties such as heat sealability; therefore, the flame treatment which uses a gas flame containing much water is preferably performed prior to the treatment with hot air. If hot air is first applied to the polyester before applying a gas flame to the polyolefin, the polyester which has been fully heated is affected by the flame being applied to the adjacent polyolefin and there is high likelihood of the occurence of hydrolysis in the polyester. On the other hand, if the flame treatment is conducted first, the polyester is yet to be heated and is not likely to undergo hydrolysis.

The other end portion of the polyester surface 2 is treated with hot air coming through nozzles 6' and 6''. After the necessary treatments described above, the end portion 4 is folded inwardly by the length necessary for bonding and the outer surface of the resulting turnup is brought into contact with the polyester surface at the other end which has been subjected to treatment with hot wir as shown in Fig. 1B. followed by compression and thermal fusion to make the body of a container having the inner and outer surfaces bonded together as shown in Fig. 1C.

The flame treatment performed in the present invention on the polyolefin portion of the first surface which has a polyester portion in addition to the polyolefin portion is primarily intended to introduce polar groups by oxidizing the polyolefin. A typical procedure of this flame treatment is by establishing contact with a flame produced by combustion with a mixture of air and an inflammable gas such as propane. The contact time is preferably in the range of 0.001 - 1.5 seconds, more preferably 0.1 - 0.6 second. If the contact time is less than 0.001 second, the polyolefin will not be sufficiently activated to produce a desired bond with the polyester. If the contact time is longer than 1.5 seconds, the polyolefin will melt away or it may sometimes burn out. In addition, the adjacent polyester may undergo hydrolysis due to heat and the moisture in the flame, causing deterioration in bond strength.

The hot air treatment performed on the polyester portion of the flame-treated surface which also has a polyolefin portion, and on the polyester surface which is to be fused with said polyolefin and polyester portions is intended to soften those two surfaces. A typical procedure of this hot air treatment is by blowing hot (300 - 1,000°C) air against each surface through nozzles for 0.2 - 5 seconds. The polyester portion of the surface which also has a polyolefin portion need not be treated with hot air immediately after the flame treatment but it is preferably treated in-line with the flame treatment.

In the present invention, the two surfaces are superposed one on the other after the flame and hot air treatments, preferably just after the hot air treatment, and are compressed so that they are thermally fused together in a softened state. The compression of the two surfaces is preferably conducted at pressures not lower than 0.05 kg/cm².

The term "a member having a surface that comprises at least a polyolefin and a polyester portion" means one having at least the following two portions, one where a polyolefin is exposed on the surface as exemplified by portion Y in Fig. 4 and the other where a polyester is exposed on the surface as exemplified by portion X in Fig. 4. Illustrative polyolefins include polyethylene and polypropylene. In consideration of the ease with which containers can be fabricated, preferred polyesters are those polyester resins which have high heat sealability. Examples of such "heat-sealable" polyester resins include low-crystallinity and non-crystalline polyester resins that have glass transition temperatures (Tg) of 50 - 150°C. The use of polyester resins having Tg of less than 50°C can sometimes cause problems such as blocking of the resin which softens and becomes sticky during subsequent processing and storage of the container. Using polyester resins having Tg higher than 150°C can sometimes introduce difficulty in making bags or boxes by heat sealing. Further, highly crystalline polyester resins are not only low in heat sealability but also brittle.

Polyester resins are copolymers of polybasic acids and polyols. Preferred polybasic acids are those which contain terephthalic acid as a main component and preferred polyols are those which contain ethylene glycol as a main component. Other polybasic acids and polyols can be contained as comonomer components.

Specific examples of heat-sealable polyesters that can be used in the present invention include: (1) a co-condensation polymer of a diol and two or more dibasic acids including terephthalic acid as a main component; (2) a co-condensation polymer of terephthalic acid and two or more diols; and (3) a polymer alloy consisting of a modified polyolefin and polyethylene terephthalate or the co-condensation polymer (1) or (2).

Other dibasic acids than terephthalic acid that can be used as comonomer components include: aromatic dicarboxylic acids such as isophthalic acid, naphthalenedicarboxylic acid, diphenyl dicarboxylic acid, diphenoxyethane dicarboxylic acid, diphenylether dicarboxylic acid and diphenylsulfone dicarboxylic acid; alicyclic dicarboxylic acids such as hexahydroterephthalic acid and hexahydroisophthalic acid; aliphatic dicarboxylic acids such as adipic acid, sebacic acid and azelaic acid; and oxyacids such as p-β-hydroxyethoxybenzoic acid, p-oxybenzoic acid and ε-oxycaproic acid.

Exemplary diols are glycols such as ethylene glycol, propylene glycol, 1,4-butanediol, 1,4-dicyclohexanedimethanol, trimethylene glycol, tetramethylene glycol, hexamethylene glycol, decamethylene glycol, neopentyl glycol, diethylene glycol, 1,1-cyclohexanedimethylol, 1,4-cyclohexanedimethylol, 2,2-bis(4-β-hydroxyethoxyphenyl)propane, bis-(4-β-hydroxyethoxyphenyl)sulfonecyclohexanediol, 1,4-bis(β-hydroxyethoxy)benzene and 1,3-bis(β-hydroxyethoxy)benzene.

Exemplary modified polyolefins include copolymers of ethylene and unsaturated carboxylic acids or esters thereof, as well as ionomers. Illustrative unsaturated carboxylic acids or esters thereof include acrylic acid, methacrylic acid, methyl acrylate, methyl methacrylate, ethyl acrylate and ethyl methacrylate. Copolymers of ethylene and unsaturated carboxylic acids or esters thereof preferably contain unsaturated carboxylic acids in amounts of 3 - 20 wt%; in the case of esters of such unsaturated carboxylic acids, their content is preferably in the range of 1 - 20 wt%.

The above-described polyester resins to be used in the present invention may contain nucleating agents or various additives including lubricants, anti-blocking agents, stabilizers, anti-haze agents and colorants. Useful nucleating agents are the fine particles of polyolefins or inorganic materials having a particle size of 2 - 10 µm. Exemplary polyolefins include low-density polyethylene, high-density polyethylene, linear low-density polyethylene and polypropylene; exemplary inorganic materials include carbon black, talc, gypsum, silica, alumina, calcium carbonate, titanium dioxide, graphite, glass powder and metal powders.

The term "a member having a polyester surface" as used herein means one the surface of which is solely composed of a polyester that may be the same as the "heat-sealable polyester resins" described above.

In the present invention, the member having a surface comprising at least a polyolefin and a polyester portion may be a separate film member from the member having a polyester surface. But from the viewpoint of ease of container fabrication, the two members are preferably integrated in the form of a single film, for example, a laminated film having a polyester surface layer on one side of a substrate and a surface layer on the other side that has an end portion composed of a polyester part and a polyolefin part as shown in Fig. 4. From the viewpoint of ease of container fabrication, the width of the turnup of the portion including the polyester surface, or the length of area X in Fig. 4, preferably ranges from 1 to 15 mm. Illustrative layer arrangements that can be adopted in such laminated films include the combination of "polyester/adhesive layer/drawn plastics/metal foil/adhesive resin/paper/polyethylene".

In the layer arrangement described above, the polyester and polyethylene layers are each made of the polymers already discussed above and their thicknesses are preferably within the ranges of 5 - 60 µm and 5 - 50 µm, respectively.

The adhesive layer may be composed of an adhesive resin, a laminate of such an adhesive resin and a polyolefin, or an adhesive agent or a primer coating agent. Exemplary adhesive resins include ethylene-α-olefinic copolymers and unsaturated carboxylic acid modified polyolefins having densities not higher than 0.910. Exemplary polyolefins include polyethylene, polypropylene, polybutene, an ethylene-vinyl acetate copolymer, an ethylene-acrylic acid copolymer, an ethylene-methacrylic acid copolymer, and an ethylene-α-olefinic copolymer. The term "unsaturated carboxylic acid modified polyolefins" as used herein means the polyolefins listed above that are copolymerized or graft-polymerized with a carboxylic acid group, an acid anhydride group or derivatives thereof. Specific examples of a carboxylic acid group, an acid anhydride group and derivatives thereof include methacrylic acid, maleic acid, fumaric acid, methacrylic acid anhydride, maleic anhydride, ethyl methacrylate, glycidyl acrylate and glycidyl methacrylate. Exemplary adhesives include one- or two-part reactive urethane based adhesives, polyester based adhesives, acrylic-urethane based adhesives and epoxy-urethane based adhesives. Exemplary primer coating agents include polyethyleneimine and alkyl titanates.

Drawn plastic layers may be provided in order to prevent permeation of the contents due to cracking in metal foils. Drawn plastics that are preferably contained in the drawn plastic layer are biaxially drawn polyester or nylon resins that are prepared by biaxially drawing polyester or nylon resins by a factor of 4 - 6 in both the machine and transverse directions and then heat setting the drawn resins.

The substrate of the laminate to be used in the present invention may be of any type that is usable as a structural support for containers and, preferably, paper is contained in the constituent layer of the substrate. Preferred examples of paper that can be incorporated in the substrate include white paper board, milk carton paper and acid-resistant paper that have basis weights of 100 - 400 g/m².

The paper in the substrate is usually overlaid with a metal foil for achieving vaious effects such as rendering the container impervious to beverages, imparting gas barrier quality for preventing the entrance of oxygen from the outside, and imparting light-shielding property. A preferred metal foil is an aluminum foil having a thickness of 6 - 200 µm. Metal foils may be provided on the substrate paper with the aid of unsaturated carboxylic acid modified polyolefins, ionomer resins and other resins that are the same as the already discussed adhesive resins.

In place of metal foils, plastic films having an evaporated glass coat may also be employed.

Containers that are preferably fabricated using the method of the present invention are those in various forms which are intended to contain highly permeable beverages including alcoholic beverages, whiskeys, juice, coffee, ptisan, oolong, mineral water and soup.

If, as in the prior art, only hot air treatment is performed in thermally fusing a polyolefin surface and a polyester surface to fabricate a container, the resulting adhesion between the two surfaces is inadequate. If, on the other hand, only flame treatment is conducted, the bonding between two adjacent polyester surfaces in either inadequate or totally impossible. However, in accordance with the present invention, the polyolefin portion of a surface that also has a polyester portion is subjected to either a flame treatment only or a flame treatment followed by a hot air treatment, whereas the other surface which is solely made of a polyester is subjected to a hot air treatment alone and, thereafter, the two surfaces are compressed together. As as result, satisfactory bond is assured both between the polyolefin and polyester surfaces and between adjacent polyester surfaces.

The following examples are given for the purpose of further illustrating the present invention but are in no way to be taken as limiting.

### Example 1

One end of a laminate having the layer arrangement shown below had the polyethylene layer separated from the inner paper layer by a given length from that end. Then, as shown in Fig. 4, the remaining part including the polyester layers was folded back inwardly by a width of 8 mm in such a way that the polyester (PET) layer would be positioned as the outer layer, whereby a laminated film having a surface comprising both a polyester and a polyethylene portion was prepared.

### Layer arrangement

Polyester (PET)(60 µm)/ biaxially oriented polyester (OPET) (12 µm)/
aluminum foil (Al)(9 µm)/
ionomer (20 µm) / paper (320 g/m²)/ polyethylene (PE)(20 µm)
where the polyester was Selar PTX 207 (product of Mitsui-Du Pont Polychemical Co., Ltd.) which was composed of terephthalic acid, isophthalic acid and ethylene glycol.

The surface of the laminated film having a polyester and a polyethylene portion was scorched, with the flame of a propane-air gaseous mixture being applied to the polyethylene portion as shown in Fig. 1. Following this flame treatment for 0.5 second, hot air (400°C) from nozzles 6 was blown against the polyester portion of said surface as well as the polyester surface at the other end for 1.5 seconds. After the hot air treatment, the two treated surfaces of the film were immediately compressed at a pressure of 0.2 kg/cm² so that they were thermally fused. The strength of the resulting bond was measured by the following method and the result is shown in Table 1 below. Measurement of bond strength: The bonded film was cut to a strip 15 mm wide and the two sides of the film were pulled apart at a speed of 300 mm/min to measure the bond strength.

### Examples 2 - 5

The procedure of Example 1 was repeated except that the polyester was replaced by PET G 5116 (product of Eastman Kodak Company) which was the condensation product of a dibasic acid component and a glycol component containing 1,4-cyclohexanedimethanol (Example 2). The procedure of Example 1 was also repeated except that the time of hot air treatment or flame treatment was changed as shown in Table 1 (Examples 3 - 5). The bond strength of each sample was measured as in Example 1 and the results are shown in Table 1.

### Comparative Examples 1 - 3

The procedure of Example 1 was repeated except that no flame treatment was conducted (Comparative Example 1). The procedure of Comparative Example 1 was repeated except that the time of hot air treatment was changed as shown in Table 1 (Comp. Ex. 2 and 3). The bond strength of each comparative sample was measured as in Example 1 and the results are shown in Table 1.

### Comparative Examples 4 - 7

The procedure of Example 1 was repeated except that no hot air treatment was conducted (Comparative Example 4). The procedure of Comparative Example 4 was repeated except that the time of flame treatment was changed as shown in Table 1 (Comp. Ex. 5 - 7). The bond strength of each comparative sample was measured as in Example 1 and the results are shown in Table 1.

**Table 1**

| | Run No. | Time of flame treatment, sec | Time of hot air treatment, sec | Bond strength, kgf/15 mm | |
|---|---|---|---|---|---|
| | | | | polyolefin/polyester | polyester/polyester |
| Example | 1 | 0.5 | 1.5 | 0.8 | 2.3 |
| | 2 | 0.5 | 1.5 | 0.8 | 2.5 |
| | 3 | 0.5 | 2.0 | 1.1 | 3.0 |
| | 4 | 1.0 | 1.5 | 0.8 | 1.8 |
| | 5 | 0.1 | 1.5 | 0.6 | 2.3 |
| Comparative Example | 1 | - | 1.5 | 0.1 | 2.7 |
| | 2 | - | 1.0 | 0.1 | 1.3 |
| | 3 | - | 2.0 | 0.2 | 3.0 |
| | 4 | 0.5 | - | 0.8 | 0.2 |
| | 5 | 1.0 | - | 0.8 | 0.3 |
| | 6 | 0.3 | - | not bonded | not bonded |
| | 7 | 2.0 | - | N.A. due to excessive heat | N.A. due to excessive heat |

As is clear from Table 1, the strength of bond between polyolefin and polyester surfaces was insufficient in Comparative Examples 1 - 3 where only hot air treatment was conducted, whereas the bonding between polyester surfaces was either insufficient or impossible in Comparative Examples 4 - 7 where only flame treatment was conducted. However, in Examples 1 - 5, satisfactory bonding was accomplished both between a polyolefin and a polyester surface and between polyester surfaces since a flame treatment and a hot air treatment were performed on predetermined areas of the laminated film.

### Example 6

The surface of a laminated film of the same type as used in Example 1 which had a polyester and a polyetheylene portion was scorched, with the flame of a propane-air gaseous mixture being applied to the polyethylene portion. Following this flame treatment for 0.5 second, hot air (400°C) was blown against the treated polyethylene portion, as well as the polyester portion of said surface and the other surface which was solely made of a polyester. After this hot air treatment for 1.5 seconds, the two treated surfaces of the film were immediately compressed at a pressure of 0.2 kg/cm² so that they were thermally fused. The strength of the resulting bond was measured as in Example 1.

### Example 7

The procedure of Example 6 was repeated except that the polyester was replaced by PET G 5116 (product of Eastman Kodak Company) which was the condensation product of a dibasic acid component and a glycol component containing 1,4-cyclohexanedimethanol.

### Examples 8 - 10

The procedure of Example 6 was repeated except that the time of hot air treatment or flame treatment was changeed as shown in Table 2. The bond strengh of each sample was measured as in Example and the results are shown in Table 2.

### Comparative Example 8

The procedure of Example 6 was repeated except that no flame treatment was conducted. The results are shown in Table 2.

### Comparative Example 9 and 10

The procedure of Example 8 was repeated except that the time of hot air treatment was changed as shown in Table 2. the bond strength of each comparative sample was measured and the results are shown in Table 2.

### Comparative Example 11

The procedure of Example 6 was repeated except that no hot air treatment was conducted. The results are shown in Table 2.

### Comparative Examples 12 - 14

The procedure of Comparative Example 8 was repeated except that the time of flame treatment was changed as shown in Table 2. The bond strength of each comparative sample was measured and the results are shown in Table 2.

**Table 2**

| | Run No. | Time of flame treatment, sec | Time of hot air treatment, sec | Bond strength, kgf/15 mm | |
|---|---|---|---|---|---|
| | | | | polyolefin/polyester | polyester/polyester |
| Example | 6 | 0.5 | 1.5 | 0.8 | 3.5 |
| | 7 | 0.5 | 1.5 | 0.8 | 3.7 |
| | 8 | 0.5 | 2.0 | 1.1 | 4.0 |
| | 9 | 1.0 | 1.5 | 0.8 | 3.5 |
| | 10 | 0.1 | 1.5 | 0.6 | 3.5 |
| Comparative Example | 8 | - | 1.5 | 0.1 | 3.5 |
| | 9 | - | 1.0 | 0.1 | 3.0 |
| | 10 | - | 2.0 | 0.2 | 4.0 |
| | 11 | 0.5 | - | 0.8 | not bonded |
| | 12 | 1.0 | - | 0.8 | not bonded |
| | 13 | 0.3 | - | not bonded | not bonded |
| | 14 | 2.0 | - | N.A. due to excessive heat | N.A. due to excessive heat |

As is clear from Table 2, the strength of bond between polyolefin and polyester surfaces was insufficient in Comparative Examples 8 - 10 where only hot air treatment was conducted, whereas the bonding between polyester surfaces was either insufficient or impossible in Comparative Examples 11 - 14 where only flame treatment was conducted. However, in Examples 6 - 10, satisfactory bonding was accomplished both between a polyolefin and a polyester surface and between polyester surfaces since a flame treatment and a hot air treatment were performed on predetermined areas of the laminated film.

As discussed on the foregoing pages, the method of the present invention insures that a surface comprising a polyolefin and a polyester portion can be thermally fused to a polyester surface in-line with a flame treatment and a hot air treatment while achieving satisfactory strength of bond.

An improved method by which a member having a surface oomprising at least a polyolefin and a polyester portion and a member having a polyester surface are thermally fused together. The method comprises subjecting the polyolefin portion of said first surface to a flame treatment, then treating the polyester portion of said first surface and said polyester second surface with hot air, and finally compressing the two surfaces to be thermally fused. If desired, the polyolefin portion of the first surface may be subjected to a flame treatment and then treated with hot air while the polyester portion is only treated with hot air and the polyester second surface is treated with hot air. The method insures that the first surface comprising a polyolefin and a polyester portion is thermally fused to the polyester second surface to produce high bond strength.

## Claims

1. A method by which a member having a surface comprising at least a polyolefin (3) and a polyester portion (2') and a member having a polyester surface (2) are thermally fused together at said two surfaces, wherein the polyolefin portion (3) of said first surface is subjected to a flame treatment, then treating the polyester portion (2') of said first surface and said polyester second surface (2) with hot air, and finally compressing the two surfaces to be thermally fused together.

2. A method according to claim 1 wherein the polyester portion (2') of said first surface is treated with hot air after the flame treatment of the polyolefin portion (3).

3. A method by which a member having a surface comprising at least a polyolefin (3) and a polyester portion (2') and a member having a polyester surface (2) are thermally fused together at said two surfaces, wherein the polyolefin portion (3) of said first surface is subjected to a flame treatment and then to a treatment with hot air while the polyester portion (2') is only treated with hot air, then treating the polyester second surface (2) with hot air, and finally compressing the two surfaces to be thermally fused together.

4. A method according to claim 1, 2, or 3 wherein the flame treatment is conducted for a contact time of 0.001 - 1.5 seconds.

5. A method according to claim 1, 2 or 3 wherein said hot air treatment is conducted with hot air being blown at 300 - 1,000 °C for 0.2 - 5 seconds.

6. A method according to any of the preceding claims wherein the flame treatment is conducted in-line with the hot air treatment.

7. A method according to any of the preceding claims wherein the polyolefin of which said polyolefin portion (3) is composed is polyethylene or polypropylene.

8. A method according to any of the preceding claims wherein the polyester of which said polyester portion (2') is composed is a heat-sealable polyester resin.

9. A method according to claim 8 wherein said heat-sealable polyester resin has a glass transition temperature of 50 - 150 °C.

10. A method according to any of the preceding claims wherein said member having a surface comprising at least a polyolefin (3) and a polyester portion (2') and said member having a polyester surface (2) are included in a single film.

11. A method according to claim 10 wherein said single film is a laminated film (1) having a polyester surface layer (2) on one side of a substrate and a polyolefin surface layer (3) on the other side which has an end portion (4) comprising a polyester (2') and a polyolefin portion.

12. A method according to claim 11 wherein said laminated film (1) has a paper-containing substrate.

13. A method according to claim 11 or 12 wherein said polyester portion (2') has a width of 1 - 15 mm.

## Patentansprüche

1. Verfahren, mittels dessen ein Teil mit einer wenigstens einen Polyolefin (3)- und einen Polyesterbereich (2') umfassenden Oberfläche und ein Teil mit einer Polyesteroberfläche (2) thermisch an diesen beiden Oberflächen miteinander verschmolzen werden, wobei der Polyolefinbereich (3) der ersten Oberfläche einer Flammbehandlung, anschließend der Polyesterbereich (2') der ersten Oberfläche und die zweite Polyesteroberfläche (2) einer Heißluftbehandlung unterzogen werden und anschließend die beiden Oberflächen zusammengepreßt werden, so daß sie thermisch miteinander verschmelzen.

2. Verfahren nach Anspruch 1, wobei der Polyesterbereich (2') der ersten Oberfläche mit Heißluft nach der Flammbehandlung des Polyolefinbereichs (3) behandelt wird.

3. Verfahren, mittels dessen ein Teil einer wenigstens einen Polyolefin (3)- und einen Polyesterbereich (2') umfassenden Oberfläche und ein Teil mit einer Polyesteroberfläche (2) thermisch an diesen beiden Oberflächen miteinander verschmolzen werden, wobei der Polyolefinbereich (3) der ersten Oberfläche einer Flammbehandlung und anschließend einer Heißluftbehandlung unterzogen wird, während der Polyesterbereich (2') lediglich mit Heißluft behandelt wird, anschließend die zweite Polyesteroberfläche (2) mit Heißluft behandelt wird und schließlich die beiden Oberflächen zusammengepreßt werden, so daß sie thermisch miteinander veschmelzen.

4. Verfahren nach Anspruch 1, 2 oder 3, wobei die Flammbehandlung für eine Kontaktzeit von 0,001 bis 1,5 Sekunden durchgeführt wird.

5. Verfahren nach Anspruch 1, 2 oder 3, wobei die Heißluftbehandlung mit Heißluft durchgeführt wird, welche bei einer Temperatur von 300 bis 1000°C 0,2 bis 5 Sekunden lang verblassen wird.

6. Verfahren nach einem der vorhergehenden Ansprüche, wobei die Flammbehandlung in Reihe mit der Heißluftbehandlung durchgeführt wird.

7. Verfahren nach einem der vorhergehenden Ansprüche, wobei das Polyolefin, aus dem der Polyolefinbereich (3) zusammengesetzt ist, Polyethylen oder Polypropylen ist.

8. Verfahren nach einem der vorhergehenden Ansprüche, wobei der Polyester, aus dem der Polyesterbereich (2') zusammengesetzt ist, ein warmversiegelbares Polyesterharz ist.

9. Verfahren nach Anspruch 8, wobei das warmversiegelbare Polyesterharz eine Glasübergangstemperatur von 50°C bis 150°C aufweist.

10. Verfahren nach einem der vorhergehenden Ansprüche, wobei das Teil mit einer wenigstens einen Polyolefin (3)-und einen Polyesterbereich (2') aufweisenden Oberfläche und das Teil mit einer Polyesteroberfläche (2) in einem einzigen Film enthalten sind.

11. Verfahren nach Anspruch 10, wobei es sich bei dem einzelnen Film um einen laminierten Film (1) mit einer Polyesteroberflächenschicht (2) auf der einen Seite des Sub strats sowie einer Polyolefinoberflächenschicht (3) auf der anderen Seite handelt, welche einen Endbereich (4) aufweist, der einen Polyester (2')- und einen Polyolefinbereich umfaßt.

12. Verfahren nach Anspruch 11, wobei der laminierte Film (1) ein paierhaltiges Substrat aufweist.

13. Verfahren nach Anspruch 11 oder 12, wobei der Polyesterbereich (2') eine Breite von 1 - 15 mm zeigt.

## Revendications

1. Méthode par laquelle un élément ayant une surface constituée par au moins une partie en polyoléfine (3) et une partie en polyester (2') et un élément ayant une surface en polyester (2) sont soudés l'un à l'autre par fusion thermique au niveau des deux dites surfaces, dans laquelle la partie en polyoléfine (3) de ladite première surface est soumise à un traitement à la flamme, puis dans laquelle la partie en polyester (2') de ladite première surface et ladite seconde surface en polyester (2) sont soumises à un traitement à l'air chaud, et enfin dans laquelle on comprime les deux surfaces à souder l'une à l'autre par fusion thermique.

2. Méthode selon la revendication 1, dans laquelle la partie en polyester (2') de ladite première surface est traitée à l'air chaud après que la partie en polyoléfine (3) ait été traitée à la flamme.

3. Méthode par laquelle un élément ayant une surface constituée par au moins une partie en polyoléfine (3) et une partie en polyester (2') et un élément ayant une surface en polyester (2) sont soudés l'un à l'autre par fusion thermique au niveau des deux dites surfaces, dans laquelle la partie en polyoléfine (3) de ladite première surface est soumise à un traitement à la flamme, puis à un traitement à l'air chaud, tandis que la partie en polyester (2') n'est traitée qu'à l'air chaud, puis dans laquelle la seconde surface en polyester (2) est soumise à un traitement à l'air chaud, et enfin dans laquelle on comprime les deux surfaces à souder l'une à l'autre par fusion thermique.

4. Méthode selon la revendication 1, 2 ou 3, dans laquelle le traitement à la flamme est réalisé avec un temps de contact de 0,001 à 1,5 seconde.

5. Méthode selon la revendication 1, 2 ou 3, dans laquelle ledit traitement à l'air chaud est réalisé avec de l'air chaud soufflé à 300 - 1 000°C pendant 0,2 à 5 secondes.

6. Méthode selon une quelconque des revendications qui précèdent, dans laquelle le traitement à la flamme et le traitement à l'air chaud sont enchaînés.

7. Méthode selon une quelconque des revendications qui précèdent, dans laquelle la polyoléfine qui constitue ladite partie en polyoléfine (3) est du polyéthylène ou du polypropylène.

8. Méthode selon une quelconque des revendications qui précèdent, dans laquelle le polyester qui constitue ladite partie en polyester (2') est constitué par une résine polyester thermosoudable.

9. Méthode selon la revendication 8, dans laquelle la résine polyester thermosoudable a une température de transition vitreuse de 50 à 150°C.

10. Méthode selon une quelconque des revendications qui précèdent, dans laquelle ledit élément ayant une surface constituée par au moins une partie en polyoléfine (3) et une partie en polyester (2') et ledit élément ayant une surface en polyester (2) sont intégrés en un film unique.

11. Méthode selon la revendication 10, dans laquelle ledit film unique est un film stratifié (1) ayant une couche de surface en polyester (2) sur un côté d'un support et une couche de surface en polyoléfine (3) sur l'autre côté qui a une extrémité (4) constituée d'une partie en polyester (2') et d'une partie en polyoléfine.

12. Méthode selon la revendication 11, dans laquelle ledit film stratifié (1) a un support contenant du papier.

13. Méthode selon la revendication 11 ou 12, dans laquelle ladite partie en polyester (2') a une largeur de 1 à 15 mm.
